# EUROPEAN PATENT APPLICATION

(11) **EP 4 610 932 A1**
(43) Date of publication of application: **03.09.2025**
(21) Application number: 25157754.0
(22) Date of filing: 13.02.2025
(51) Int. Cl.: G06T 15/04, A63F 13/50, A63F 13/60, G06F 16/00

(54) **TEXTURE MANAGEMENT SYSTEM AND METHOD**

(30) Priority: 29.02.2024 GB 202402892; 27.06.2024 GB 202409277
(71) Applicant: Sony Interactive Entertainment Inc., Tokyo 108-0075 (JP)
(72) Inventor: LEUNG, Jun Yen, London, W1F 7LP (GB); CERRATO, Maurizio, London, W1F 7LP (GB); GREEN, Lawrence Martin, London, W1F 7LP (GB); MONTI, Maria Chiara, London, W1F 7LP (GB); CONNOR, Patrick John, London, W1F 7LP (GB); GUPTA, Rajeev, London, W1F 7LP (GB)
(74) Representative: D Young & Co LLP

(57) **Abstract**

A system configured to manage the storage of textures corresponding to respective content, the system comprising a texture identification unit configured to identify a texture to be stored at a device, the texture being associated with first content, an equivalence identification unit configured to identify a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures, and a management unit configured to, in the case that a perceptual equivalence is identified between the texture associated with the first content and a candidate texture, generate and store a pointer directed toward that candidate texture instead of the texture associated with the first content, or in the case that no perceptual equivalence is identified between the texture associated with the first content and any candidate texture, store the texture associated with the first content.

## Description

### BACKGROUND OF THE INVENTION

### Field of the invention

This disclosure relates to a texture management system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time, the amount of data required to store content such as video games has increased significantly in response to demands for increasingly high levels of graphical quality and interactivity. While a number of years ago games may have been provided to users in packages on the order of Megabytes, this is now smaller than the size of the average web page. Initially the increase in file size for content was limited by physical storage media constraints, with developers being required to optimise or compress content heavily or omit content altogether, but with digital distribution such limits have been overcome even if this may be problematic for those with slow or metered internet connections. This has led to a number of more recent games requiring on the order of 100GB of storage space for an install.

One big contributor to this increased storage requirement is the use of increasingly large, complex, and/or detailed textures for generating images of a virtual environment and elements within it. Several solutions have been developed to specifically target this problem or circumvent it - for instance, making particularly high quality textures optional within a game (through the provision of separate 4K texture packs or the like to replace the base textures), or compressing textures.

However, it is considered in the present disclosure that alternative methods for addressing the size of textures within digital content may be preferable.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an exemplary entertainment system;
Figure 2 schematically illustrates a method for managing texture storage;
Figure 3 schematically illustrates three exemplary textures;
Figure 4 schematically illustrates a system configured to manage the storage of textures corresponding to respective content; and
Figure 5 schematically illustrates a method for managing the storage of textures corresponding to respective content.

### DESCRIPTION OF THE EMBODIMENTS

Referring now to the drawings, wherein like reference numerals designate identical or corresponding parts throughout the several views, embodiments of the present disclosure are described.

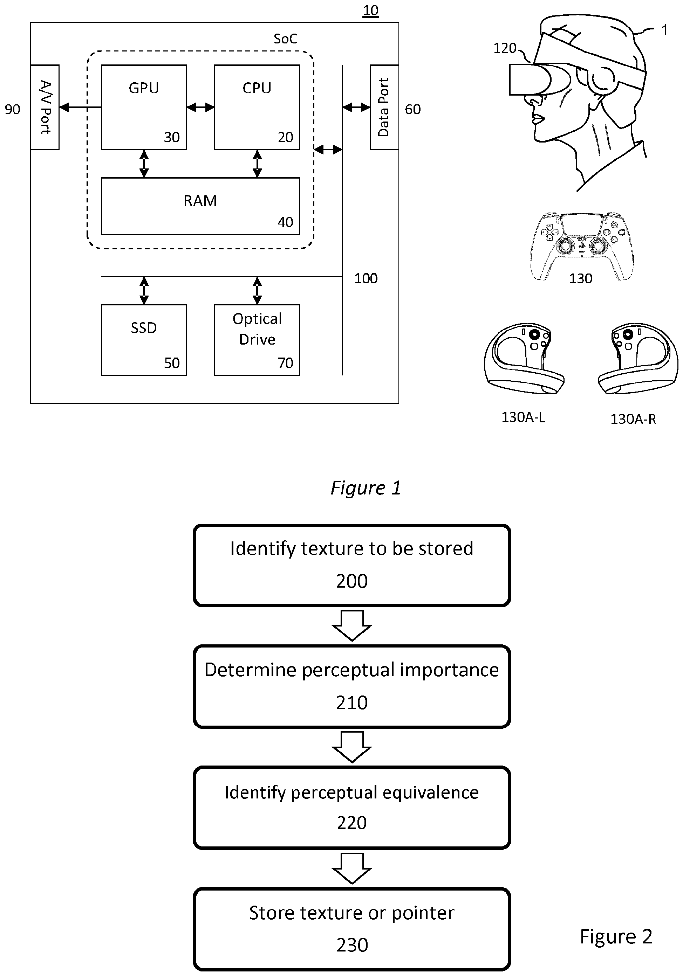

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L/-R) in the case of the HMD.

Implementations of systems and methods according to the present disclosure seek to improve data storage and/or transmission efficiency through the consideration of perceptually equivalent (or perceptually similar) textures. By identifying such textures, it is possible to reuse textures that are already present on a device - thereby allowing a pointer to an existing texture to be stored rather than a second texture. Perceptual equivalence here does not require that that the textures are identical (although this may be the case), but instead that the overall impression upon a user is the same (or at least substantially the same).

The threshold for perceptual equivalence may be set by the skilled person implementing such systems and methods, as the teachings within this document may be applied regardless of the threshold. While the user experience may be impacted by a higher threshold (such that more dissimilar textures are considered to be sufficiently equivalent for substitution), this may be justified in view of the resulting technical benefits as it is considered that the benefits are proportional to the threshold level (in that a higher threshold leads to increased technical benefit). A preferred threshold value may therefore be determined freely by the skilled person based upon a preference or technical requirement which dictates an appropriate trade-off between technical benefits and user experience.

One example of perceptual equivalence is found in colour theory with the concept of metamerism. Metamers are colours which are perceived to be the same by the human eye, but have different spectral power distributions. In other words, these are colours which are measurably different but due to physical limitations (the human eye only having three different colour receptors) are interpreted the same way by a human viewer.

Image metamerism is another example of perceptual equivalence that may be considered. Rather than being limited only to consideration of the perceptual equivalence of colours as viewed by a human viewer, this also considers spatial or geometric properties of the images in assessing whether the viewer would perceive the images to be the same. Image metamerism can be measured or evaluated statistically by comparing properties of two images, for instance.

In some cases, image metamerism may be identified by applying a noise function to each of two images and then determining the image difference; for instance, by subtracting one processed image from the other to determine an image residual in a simplified implementation, or using a more complex method of determining an image difference. If the difference between the processed images is below a predetermined threshold value, then the images can be considered to be metamers of one another.

A more specific example of image metamerism is that of peripheral metamerism; these are images that are different, but are perceived to be similar by a viewer when seen in the periphery of their visual field. Peripheral metamerism is distinct from a more general image metamerism due to the nature of human vision in which the peripheral regions are associated with a lower visual acuity and colour perception.

By analysing textures in accordance with such principles, texture metamers may be identified amongst content stored (or to be stored) on a device such as the entertainment system 10 of Figure 1. This can enable textures associated with a first video game to be reused for a second video game, for example, thereby reducing the number of textures which are required to be downloaded and/or stored for that second video game. This can potentially reduce the amount of data that is downloaded, improving the efficiency of the content distribution process, as well as the amount of data stored at the system 10. This therefore enables a more efficient utilisation of the storage device (such as the SSD 50) associated with the system 10.

Figure 2 schematically illustrates a method by which such advantages are able to be realised, with specific examples of applications of this method being described in more detail below.

A step 200 comprises identifying a texture to be stored at a device such as the entertainment system 10 of Figure 1. This may be a texture stored on a disc or other removable storage medium, remotely at a server, or one already downloaded to the device. The texture that is identified may be associated with a video game, for example, or any other application which renders image or video content for display. Identifying the texture can include identifying one or more details about the texture and its use, such as a file size, an expected frequency of use (for instance, from metadata provided by a game developer), or an associated object or class of object.

A step 210 comprises determining a perceptual importance associated with the texture to be stored; this step is optional, as it is not required for the identification of texture metamers, but may be preferred as it can be used to identify those textures which are particularly suited to being substituted.

The perceptual importance of a texture is a measure of how much attention the user would pay to the texture in rendered content - in other words, a measure of how important the details of a texture are to the overall impression given by an image. Perceptual importance may be based upon one or more properties of the texture itself - such as bright or unusual colours having a greater importance - or its use, such as a size or location of an object rendered using the texture. A texture having a low perceptual importance is typically considered to be more suited to substitution, as the likelihood of the viewer noticing such a substitution is reduced.

In some implementations, the perceptual importance may be identified in dependence upon a user profile which indicates one or more preferences or reactions to content. For instance, the importance may vary based upon a user's sensitivity to colour or their history of interacting with content - a user who plays a lot of similar games will likely pay less attention to particular aspects of those games due to repetition. An example of this is a user who plays a lot of games featuring dinosaurs - while these may standout to a player who primarily plays sports games, to a user that plays a lot of games featuring dinosaurs these may be a lot less interesting. Any suitable parameters may be considered in this regard, with the skilled person being able to determine correspondence between user profile information and perceptual importance freely.

A step 220 comprises identifying a perceptual equivalence of the texture to be stored with one or more other textures stored at the device. This step may be conditional on a below-threshold perceptual importance being determined for the texture to be stored, although it may be performed regardless of this - for instance, if a particularly strong perceptual equivalence is identified then the substitution may be performed irrespective of any measure of perceptual importance. Similarly, the determined perceptual importance may be used to set a threshold difference between textures that may be observed while still being considered perceptually equivalent.

Identifying a perceptual equivalence between textures can be formed on the basis of any statistical analysis which evaluates similarity or difference, for example, or the use of a trained machine learning model which evaluates perceptual equivalence between textures.

A step 230 comprises storing the texture or a pointer to a perceptually equivalent texture already stored at the device. The decision as to which is stored can be based upon both the perceptual importance and/or the perceptual equivalence, such that the skilled person implementing an arrangement in accordance with this method is able to achieve a desired balance between technical benefits and likelihood of impact upon the viewing experience.

In the case that the texture is to be stored, no change is made to the storage process - the texture is simply stored in the expected location as a part of a game install or the like. In the case that a pointer is to be stored, a pointer is generated which indicates the location of the perceptually equivalent texture so that this can be accessed by an application such as a game. The pointer may be stored in the same file directory as the texture would usually have been stored. Alternatively, game code or the like may be modified directly to reflect the location of this texture.

By implementing such a method it is therefore possible to realise a system in which at least storage efficiency of textures (and applications referencing said textures) is improved.

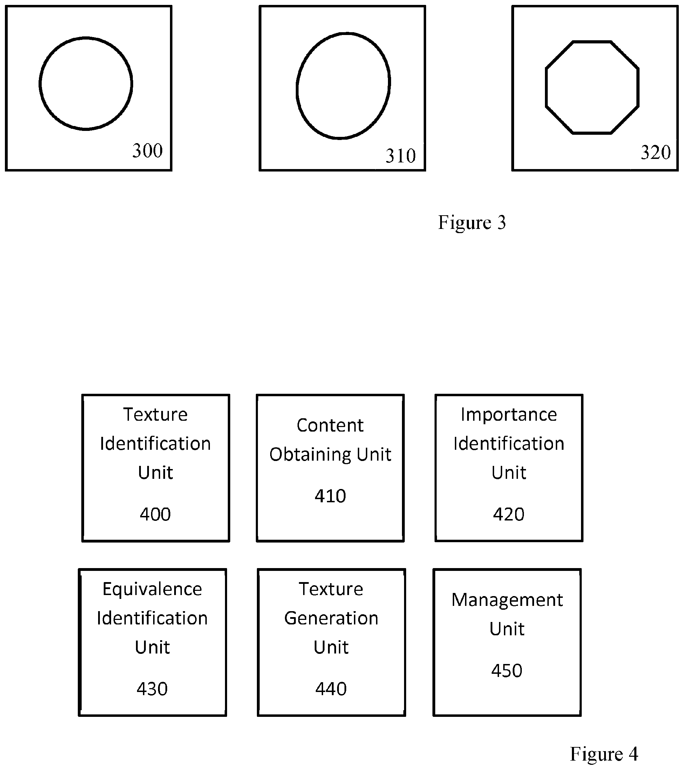

Figure 3 schematically illustrates three exemplary textures; these have been simplified for clarity, but of course the discussion would apply equally to textures having more complex patterns and colours than those shown.

In this example, the first texture 300 is the texture to be stored. In the case that this texture is of high perceptual importance - such as being present on the back of a user's avatar in a third-person game and therefore frequently visible in a central area of the display - a higher threshold for perceptual equivalence may be applied. In that case, the texture 310 may be designated as a metamer and therefore a suitable substitute for the texture 300; these textures provide a similar overall impression in that the shapes are broadly the same (with the shape in the texture 310 having a slight elongation as the only difference). However, the texture 320 would not be considered to be a suitable substitution - while the overall shape is somewhat similar, it would be immediately apparent to a viewer that they were not viewing the texture 300.

In view of this, if the texture 310 were already stored at the device then the texture 300 would not be stored; instead, a pointer to the texture 310 would be stored, or the content which utilises the texture 300 would be updated accordingly to utilise the texture 310 instead of the texture 300.

However, should the perceptual importance associated with the texture 300 be determined to be lower - such as due to only being present in the periphery of the viewer's vision, or associated with a low-importance object such as background scenery - then whichever of the textures 310 or 320 is stored at the device already would be able to be used as a metamer. Of course, should both of the textures 310 and 320 be stored at the device already then the texture 310 would be selected as the metamer in preference to the texture 320 due to the higher degree of perceptual equivalence.

As noted above, the perceptual importance of a texture is a measure of how much attention the user would pay to the texture in rendered content - in other words, a measure of how important the details of a texture are to the overall impression given by an image. A texture with a low perceptual importance is typically one which a user will not study in detail, either due to occupying a small screen area or being displayed for a small period of time, for example.

Determining the perceptual importance of a texture can include the use of an algorithm which evaluates a number of different factors such as:
- The display size of the object utilising the texture;
- The distance of that object from the player and/or camera;
- The location of that object in the display area (central regions versus peripheral regions, for example);
- Duration of display of the texture; and/or
- A typical or average velocity associated with that object (or a corresponding measure of motion blur applied to a texture during rendering).

Information about each of these may be encoded alongside the texture in metadata, for example, with the information being supplied by a game developer or the like. In some cases these values may be derived by analysing videos of the content which utilises the texture, for instance using an image recognition tool or the like (which is used to recognise use of the texture); this may be performed as a part of the method of Figure 2 in step 210, for example, or may be performed in advance to generate the metadata.

Examples of content in games that may typically be considered to be of low perceptual importance include features such as trees, foliage, clouds, and buildings in the distance or periphery in a racing game. Similarly, in a fighting game the background may be of low perceptual importance as well as any objects outside of the main fighting area (such as those which are often off-screen or only at the periphery). High perceptual importance objects in a game may include features such as a user's own character or vehicle, a high profile enemy or objective, and elements of a heads-up display (HUD).

In implementations in which a method according to Figure 2 is to be implemented after initial storage of the textures, such as during a 'clean-up' process or the like, usage data from the user's own use of the texture may be able to be relied upon. For instance, if a user plays a game then statistics for one or more textures may be tracked by a tool designed for that purpose - such a tool may be configured to collect data relating to any one or more of the above factors (or indeed any other factors). In this case, the determination of perceptual importance can be tailored to a particular viewer's usage. In these implementations, the algorithm can be content-specific such that suitable weights for each factor are assigned. For instance, in a racing game the average velocity associated with objects is likely to be similar for all objects outside of the car due to this velocity being largely governed by a driving speed - as such the weighting of that factor may be reduced for such games. Similarly, an algorithm used by a developer may be tailored to a specific game or content as appropriate.

In some cases a trained machine learning model may be utilised to determine the perceptual importance of one or more textures (and/or objects associated with those textures) within content. The model may use a video or sequence of images as an input, and as an output a value indicating a perceptual importance may be generated; alternatively, or in addition, values representing one or more of the factors described above may be output (with these being able to be used by a perceptual importance determining algorithm such as those already described).

A suitable model may be trained using any appropriate method and a corresponding dataset; the specific details of the training are able to be determined freely so long as the model is able to identify a perceptual importance of an object or texture within content. Video data may be the preferred format of training data (rather than static images) due to the consideration that motion may cause the perceptual important of a texture to be different to the relevance when static, but this is not a requirement. Training data may be content-specific, leading to a trained model targeted as that specific content, or a more general model may be used in which training data is drawn from a range of different content sources.

One option for a training dataset is that of video files which have associated information indicating a heatmap or the like of user gaze locations for each frame within the video file. This provides an indication of which features are likely to be looked at in an image, and therefore can be used to infer a perceptual important of different features - features which are frequently subject to a viewer's gaze are able to be considered more perceptually relevant.

A generative model (for example) can then be used for the determination of perceptual important in conjunction with this dataset. Using the pairs of corresponding image frames and gaze locations as an input, the generative model can be trained to generate predictions of gaze locations for new image frames. These predictions can then be used to infer a perceptual importance of textures/objects in new image frames. Rather than being used in real-time, it may be preferable to use such a trained model on videos of the content (such as a playthrough of a game) in advance so that classification of the perceptual importance of textures can be predetermined and stored as metadata alongside the texture (for example).

Another option for a training dataset is that of labelled video or image data in which a perceptual important score is assigned to each texture or object (or at least a subset of those) in the video frame/image. Based upon this data, a classification model may be trained to predict perceptual important of new objects based upon the properties they share with those in the training dataset (for example). For instance, a support vector machine algorithm may be trained to classify objects or textures into high-, medium- or low-relevance categories.

As noted above, these are simply examples - any model and corresponding training method may be selected freely for the purpose of identifying a perceptual important of objects and/or textures in an image or video.

Turning the identification of perceptual equivalence, this comprises any suitable process for determining a visual similarity between two textures. While in some cases it is only the threshold similarity that is required for the textures to be considered equivalent that is dependent upon the context in which the texture is used (such as the perceptual importance), it is also considered that the process for determining visual similarity may be different for different texture contexts.

For instance, should a texture be subject to high motion in typical use, the significance of fine detail in the texture may be reduced when comparing textures for equivalence determination. This is because a motion blur is likely to be applied to the texture during rendering, smoothing out any such details, and/or the use is less likely to be able to have the time to appreciate any such detail due to the movement speed and likely short display duration.

Similarly, if textures are primarily displayed in the periphery of a user's field of view then the significance of colouring in the texture may be reduced when comparing textures for equivalence determination. This is because a viewer's colour sensitivity is reduced in peripheral regions of their vision, and as such colour differences would be less noticeable.

In such cases the same method of determining a perceptual equivalence may be utilised with each factor being assigned a different weighting in the final equivalence determination. Alternatively, or in addition, a method may be used which scores the equivalence of textures on a number of different metrics separately - and as such one or more of the metrics may be ignored where appropriate (improving the processing efficiency by not comparing colour, for example), or may be omitted from the equivalence determination as appropriate.

In some implementations a comparison between textures may be performed by subtracting one image from another to identify a residual; based upon the magnitude and/or appearance of this residual, a determination of perceptual equivalence may be made. Any suitable algorithm may be used for characterising the residual and assigning an equivalence value to the images on that basis.

The process may be enhanced by first performing processing on the textures being compared; rather than using the textures as they appear in the content, processing may be applied to blur or apply a noise to the textures before comparing them. This reduces the level of detail within the textures, which can reduce the impact of fine detail in textures on the comparison. For instance, two wood grain textures may appear to be entirely different when fine detail is considered - but applying a noise function can reduce the effect of the grains and lead to a higher degree of equivalence being calculated. This would be appropriate, given that a viewer is likely to consider wood grain textures to be largely interchangeable.

In some implementations a machine learning model may be trained to identify perceptual equivalence (or at least score a degree of similarity of two textures in one or more categories). An example of a suitable model is a classification model; a support vector machine may be used for this purpose. A suitable training dataset for such a model would be a range of textures which are considered to be perceptually equivalent; pairs (or larger groups) of textures considered to be perceptually equivalent may be provided together as examples of perceptually equivalent textures. These may be pre-processed or not, as appropriate. Once trained, a pair of candidate textures (which have been similarly pre-processed, if the training data textures were) may be provided as an input and the model can output a determination of perceptual equivalence.

In some cases a score may be generated which indicates a level of equivalence or a likelihood that the textures would be considered equivalent; this can enable a more effective use of the output, such as applying variable thresholds for equivalence. Alternatively, or in addition, different models may be trained for different contexts (such as 'fast-moving textures' or 'peripheral textures' which would cause a different threshold to be applied.

The process of identifying texture metamers and adjusting the obtaining or storage of textures appropriately may be performed at any suitable time. In each of these cases it may be considered that each texture is compared with existing textures to search for metamers; however in other cases this may be performed only for a subset of the textures, such as the largest textures in the content or those which are most suitable for being substituted so as to reduce a processing burden upon the device. Alternatively, any subset of the textures may be considered with an order of the processing being determined based upon a priority value based upon characteristics such as texture size.

In some cases, this may be performed during installation of the content; in this case, each texture in that content is compared to existing textures stored on the device. This can be performed as each texture is encountered in the installation process, with the storing of the new texture being conditional upon no texture metamers being identified on the device. This may be advantageous in that there is no requirement to store the texture in long-term memory at any point if a texture metamer is identified - thereby enabling content to be installed which may otherwise not be able to be installed due to storage constraints.

In some cases, it may be preferred to perform such a process as a background process when a device has spare capacity. For instance, this may be during an idle period (such as when a user has turned on a games console but not begun playing a game), when in a standby mode, or when other content is being downloaded. This process may be scheduled for an overnight period, for instance, or for a time when energy costs are low or when excess energy is being generated by solar panels or the like.

Alternatively, a process may be performed by a developer before distributing content - this may be particularly effective if the other textures being compared to are other games by the same developer, for instance. In this case, one or more files may be marked as optional for install in dependence upon the presence of another application, or alternatively different install packages may be generated for each combination of pre-existing assets at a device that have been considered.

Similarly, an online content store may perform such a process for content; in such an implementation a subset of available content may be considered for searching for texture metamers - for instance, those games by the same publisher or developer, the most popular games amongst users, and/or those games which are in a similar genre or have a similar theme or setting. This can reduce the processing burden significantly versus searching for texture metamers amongst all content, whilst also ensuring that the identified metamers are likely to be of use (as if only a small number of users actually had access to the metamer then little benefit would be obtained).

Another time that such a process can be performed is prior to download of content. In this case, a low-resolution or otherwise reduced-size version of a texture may be downloaded for comparison purposes. Should no texture metamer be identified amongst the textures stored at the downloading device, then the original texture may be downloaded. However, if a metamer is identified then the downloaded version of the texture may be discarded and no download of the original texture need be performed.

While there may be a significant processing burden in such methods due to the number of candidate textures that may be available at a device, the improvements to storage efficiency may be sufficient to more than justify this should a number of metamers be identified. Numerous modifications may also be considered to the process to reduce the processing burden.

For instance, texture file names or texture metadata may be used to identify likely candidates for texture metamers; such metadata may include use information, texture size, classification information (such as an object type), representative colours, or any other information that may be indicative of the texture properties. By considering such labels or information, a number of comparisons may be skipped - such as comparing a 'woodgrain' texture to a 'grass' texture, which could be on the basis of a difference in representative colours identified in metadata, for example.

Alternatively, or in addition, information about the content with which a texture is associated may be utilised to narrow the texture metamer search. For instance, a texture associated with a football game is unlikely to have an overlap in textures with a space-themed shooter and as such comparisons between these textures in the search for texture metamers can be skipped.

Further efficiencies may be realised by performing the comparison on low-resolution versions of the textures, if the generation of these low-resolution versions is able to be performed using less processing power than the amount saved by comparing low-resolution versions of the textures.

In some cases, two (or more) textures may be identified in which there are a lot of similarities but these are not sufficient for the textures to be considered metamers. While in many cases these textures could both be stored, it may instead be desirable to generate a new texture which would be considered a metamer for both of these textures. In that case, the new texture may be generated and stored while neither of the original textures is stored. This generation may be performed in a simplified manner by simply generating an average of two textures, such that at each position on the textures an average of the colour values is determined and stored in the new texture. Alternatively, a specifically trained texture generation model may be used which is configured to generate a representative texture from two (or more) input textures. This new texture may be stored in place of one of the textures, or may be stored in a separate file location with each content instead having a pointer to the new texture.

When a user uninstalls content, it is possible that a texture which is the target of one or more pointers would be deleted; this would be considered undesirable, as the pointers would no longer identify a texture and as such the rendering process would encounter an error. It is therefore considered that in this case, either the texture should be retained in its original location or moved to the location of one of the pointers (with the remaining pointers being updated accordingly). Alternatively, each of the textures which were replaced by a pointer initially may be downloaded and compared to identify any metamers amongst those textures. In this case, a new representative texture can be identified and stored, and new pointers can be generated accordingly.

Figure 4 schematically illustrates a system configured to manage the storage of textures corresponding to respective content. The functionality of this system may be realised by one or more CPUs and/or GPUs (such as those of the entertainment system 10 of Figure 1); these processing elements may be located at a single device, or the functionality may be distributed amongst different processing devices as appropriate for a given implementation. The system of Figure 4 comprises a texture identification unit 400, an optional content obtaining unit 410, an optional importance identification unit 420, an equivalence identification unit 430, an optional texture generation unit 440, and a management unit 450.

The texture identification unit 400 is configured to identify a texture to be stored at a device, the texture being associated with first content. The texture identification unit 400 may be configured to identify one or more properties of the texture and/or its use in the first content, such as a representative colour, typical display location, and/or velocity of an object which is displayed using the texture. In some implementations each texture to be stored at a device may be identified for such processing in turn, however in some implementations it may be preferred that only the largest textures (that is, those which would offer the greatest storage efficiency gains if replaced) or particular categories of textures (such as those identified as 'background textures') may be identified as appropriate.

The texture identification unit 400 may be configured to perform this process (and indeed, the system itself may be configured to operate) at one or more different times in dependence upon the content or user preferences. For instance, the texture identification unit 400 may be configured to identify the texture during an installation process for the first content; alternatively, the texture identification unit 400 may be configured to identify the texture after an installation process for the first content or before an installation process for the first content. Examples of such processes are described above in more detail.

In the case in which the texture identification is performed prior to or during installation, it is considered that the texture identification unit 400 may be configured to identify the texture before it is obtained by the device. This may be performed as part of a download process, for instance, or prior to a download of the full game content being initiated. This can enable the identification of texture metamers prior to downloading the full texture, for instance based upon the process associated with the optional obtaining unit 410 described below, or if a texture to be downloaded has sufficient metadata or the like to enable the identification of a texture metamer without having to perform the comparison of textures.

The optional obtaining unit 410 is configured to obtain a modified version of the identified texture, wherein the modified version has a smaller file size than the identified texture, wherein the modified version is used by the equivalence identification unit for identifying a degree of perceptual similarity. This may be performed so as to enable the processing to be performed without downloading the full version of the texture to be stored, thereby increasing the transmission efficiency of the content should a texture metamer be identified.

The optional importance identification unit 420 is configured to identify a perceptual importance of the texture in the first content, wherein the equivalence identification unit is configured to identify a perceptual similarity only for those textures with an identified perceptual importance below a threshold value. Examples of the identification are discussed above with reference to step 220 of Figure 2, for example. The importance identification unit 420 may be configured to identify a perceptual importance in dependence upon one or more of a display location, display duration, display size, and/or average velocity associated with the display of the texture; however any parameter may be considered as appropriate.

The perceptual importance identification may be tailored to specific users, for instance via a user profile which indicates their visual characteristics (such as colour and motion sensitivity) or content interaction data (such as other content interacted with, or parameters describing earlier interactions such as gaze history data). Alternatively, or in addition, the perceptual importance identification may be tailored to specific content or genres of content so as to enable a more accurate identification than would be expected using a general identification process.

The equivalence identification unit 430 is configured to identify a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures.

The candidate textures may include all textures stored at the device, in some implementations, or they may be selected from amongst a plurality of those textures stored at the device in dependence upon one or more shared characteristics with the texture associated with the first content. Examples of possible shared characteristics include representative colours, associated objects, associated content (such that only textures for similar content are considered), size, semantic labels describing a texture and/or its use, and/or a file name of a texture. In other words, candidate textures may be selected in dependence upon the likelihood that there is a perceptual similarity between them and the texture to be stored.

The processing performed by the equivalence identification unit 430 may be terminated in response to any suitable condition; this may be based upon all of the candidate textures having been compared to the texture, or at least a threshold proportion of the candidate textures, for example. In the case that multiple candidates may be considered to be perceptually equivalent, a preferred one of these may be selected on the basis of any suitable criteria - such as one having the highest degree of perceptual similarity (and therefore preferred on the grounds of preserving the user experience most effectively), one which has the smallest file size (and therefore preferred on the grounds of efficiency), or one which belongs to content by the same publisher or the like. Alternatively, the processing may be terminated in response to identifying any perceptually equivalent candidate, or a predetermined number from which a preferred one can be selected as the texture metamer which is to be used instead of the texture.

The threshold degree of similarity between textures may be determined in dependence upon a number of factors; for instance, the remaining storage space at a device may be considered, where when storage space becomes more limited the threshold is lowered so as to more aggressively preserve the remaining storage space. Similarly, a user's preferences may be considered - a user with a higher focus on visual fidelity may prefer that a substitution is only made when the degree of similarity is exceptionally high, and they may set a threshold accordingly. In some cases, the equivalence identification unit 430 may be configured to set the threshold degree of similarity in dependence upon the identified perceptual importance of the texture (or an associated object), with a higher degree of similarity being required for perceptual equivalence as the identified perceptual importance increases.

In some implementations, the equivalence identification unit 430 may be configured to apply pre-processing to the textures to reduce the level of detail prior to the identification of a degree of perceptual similarity. This may be applying a blurring function to an image, for example, or otherwise adding noise to an image; the intention of the pre-processing is to reduce the level of fine detail in a texture so that this does not have a disproportionate effect on whether the textures are regarded as being perceptually equivalent or not. In other words, such detail can cause two perceptually very similar textures to appear completely different when analysed - and as such removing such detail can enable an improved result to be obtained. It is also considered that a downscaling of the texture may be performed, thereby reducing both the texture quality and the level of detail - this would enable two smaller representations of the textures to be compared for perceptual similarity, thereby reducing the processing burden associated with this step.

As discussed above, both the identification of the perceptual importance and the identification of the perceptual equivalence may be performed by a respective trained machine learning model (or indeed a combined model which is configured to perform both).

The optional texture generation unit 440 is configured, in the case that no perceptual equivalence is identified between the texture associated with the first content and any candidate texture, to generate a texture which is considered perceptually equivalent to the texture associated with the first content and at least one of the candidate textures having at least a predetermined degree of similarity, the predetermined degree of similarity being less than the threshold degree of similarity. This texture can then be stored by the management unit 450 (described below) in place of one of the texture and the candidate texture (or textures), with pointers to this texture being generated accordingly to replace the others of those textures. As such, a texture metamer can be created where no metamer would have otherwise been identified. This can also be used to increase the scope of a metamer - rather than being used to represent two textures, a texture could be processed to enable it to represent three or more textures so as to further increase the storage efficiency.

In an illustrative example, the threshold perceptual similarity could be 90% but the closest perceptual similarity between the texture to be stored and a candidate texture is 85%. As such, both textures would be stored as normal. However, it may be preferred that a new texture is generated which combines elements of both of these textures (for instance, using a machine learning model or a texture averaging algorithm as described above) to generate a texture which would have an above-90% perceptual similarity with each texture. In this case, only a single texture and pointer is stored and therefore the storage efficiency is improved.

The management unit 450 is configured to store a pointer or texture as appropriate based upon the result of the processing performed by the equivalence identification unit 430. In particular, in the case that a perceptual equivalence is identified between the texture associated with the first content and a candidate texture, the management unit 450 is configured to generate and store a pointer directed toward that candidate texture instead of the texture associated with the first content. Alternatively, in the case that no perceptual equivalence is identified between the texture associated with the first content and any candidate texture, the management unit 450 is configured store the texture associated with the first content. In the case that the system is configured to perform the texture management process after installation of the content, the step of generating and storing a pointer may also include deleting the texture that is already stored; similarly, the step of storing the texture may be interpreted as 'continuing to store the texture' or otherwise omitted due to the texture already being stored.

The arrangement of Figure 4 is an example of a processor (for example, a GPU and/or CPU located in a games console, server, or any other computing device) that is operable to manage the storage of textures corresponding to respective content, and in particular is operable to:
identify a texture to be stored at a device, the texture being associated with first content;
identify a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures; and:
   in the case that a perceptual equivalence is identified between the texture associated with the first content and a candidate texture, generate and store a pointer directed toward that candidate texture instead of the texture associated with the first content, or
   in the case that no perceptual equivalence is identified between the texture associated with the first content and any candidate texture, store the texture associated with the first content.

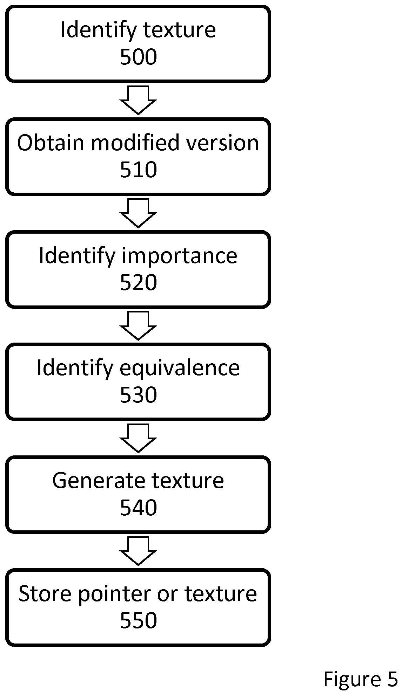

Figure 5 schematically illustrates a method for managing the storage of textures corresponding to respective content. While all steps are shown in this Figure for clarity, not all of the steps are considered essential as indicated below and in accordance with the discussion of Figure 4 above.

A step 500 comprises identifying a texture to be stored at a device, the texture being associated with first content (such as a video game).

An optional step 510 comprises obtaining a modified version of the identified texture, wherein the modified version has a smaller file size than the identified texture, wherein the modified version is used by the equivalence identification unit for identifying a degree of perceptual similarity.

An optional step 520 comprises identifying a perceptual importance of the texture in the first content; this may be based upon texture/object metadata or video analysis of the content during use, for example.

A step 530 comprises identifying a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures. In the case that the optional step 520 is performed, this step may include only identifying a perceptual similarity only for those textures with an identified perceptual importance below a threshold value.

An optional step 540 comprises, in the case that no perceptual equivalence is identified between the texture associated with the first content and any candidate texture, generating a texture which is considered perceptually equivalent to the texture associated with the first content and at least one of the candidate textures having at least a predetermined degree of similarity, the predetermined degree of similarity being less than the threshold degree of similarity.

A step 550 comprises, in the case that a perceptual equivalence is identified between the texture associated with the first content and a candidate texture, generating and storing a pointer directed toward that candidate texture instead of the texture associated with the first content (including deleting the texture if it is already stored). Alternatively, in the case that no perceptual equivalence is identified between the texture associated with the first content and any candidate texture, storing the texture associated with the first content (or at least continuing to store that texture, rather than deleting it in favour of a pointer to another texture).

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system configured to manage the storage of textures corresponding to respective content, the system comprising:
a texture identification unit configured to identify a texture to be stored at a device, the texture being associated with first content;
an equivalence identification unit configured to identify a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures; and
a management unit configured to:
in the case that a perceptual equivalence is identified between the texture associated with the first content and a candidate texture, generate and store a pointer directed toward that candidate texture instead of the texture associated with the first content, or
in the case that no perceptual equivalence is identified between the texture associated with the first content and any candidate texture, store the texture associated with the first content.

2. A system according to claim 1, wherein the texture identification unit is configured to identify the texture during an installation process for the first content.

3. A system according to claim 1, wherein:
the texture identification unit is configured to identify the texture after an installation process for the first content, and
the management unit is configured, in the case that a perceptual equivalence is identified between the texture associated with the first content and a candidate texture, to delete the texture.

4. A system according to any preceding claim, wherein the texture identification unit is configured to identify one or more properties of the texture and/or its use in the first content.

5. A system according to any preceding claim, comprising an importance identification unit configured to identify a perceptual importance of the texture in the first content, wherein the equivalence identification unit is configured to identify a perceptual similarity only for those textures with an identified perceptual importance below a threshold value.

6. A system according to claim 5, wherein the equivalence identification unit is configured to set the threshold degree of similarity in dependence upon the identified perceptual importance.

7. A system according to claim 5 or claim 6, wherein the importance identification unit is configured to identify a perceptual importance in dependence upon one or more of a display location, display duration, display size, and/or average velocity associated with the display of the texture.

8. A system according to any preceding claim, wherein the equivalence identification unit is configured to apply pre-processing to the textures to reduce the level of detail prior to the identification of a degree of perceptual similarity.

9. A system according to any preceding claim, wherein the texture identification unit is configured to identify the texture before it is obtained by the device.

10. A system according to claim 9, comprising an obtaining unit configured to obtain a modified version of the identified texture, wherein the modified version has a smaller file size than the identified texture, wherein the modified version is used by the equivalence identification unit for identifying a degree of perceptual similarity.

11. A system according to any preceding claim, comprising a texture generation unit configured, in the case that no perceptual equivalence is identified between the texture associated with the first content and any candidate texture, to generate a texture which is considered perceptually equivalent to the texture associated with the first content and at least one of the candidate textures having at least a predetermined degree of similarity, the predetermined degree of similarity being less than the threshold degree of similarity.

12. A system according to any preceding claim, wherein the candidate textures are selected from amongst a plurality of textures stored at the device in dependence upon one or more shared characteristics with the texture associated with the first content.

13. A method for managing the storage of textures corresponding to respective content, the method comprising:
identifying a texture to be stored at a device, the texture being associated with first content;
identifying a degree of perceptual similarity between the texture associated with the first content and each of one or more candidate textures associated with content other than the first content, the one or more candidate textures being stored at the device, wherein perceptual equivalence between textures is identified in response to an above-threshold degree of perceptual similarity being identified for those textures; and
in the case that a perceptual equivalence is identified between the texture associated with the first content and a candidate texture, generating and storing a pointer directed toward that candidate texture instead of the texture associated with the first content, or
in the case that no perceptual equivalence is identified between the texture associated with the first content and any candidate texture, storing the texture associated with the first content.

14. Computer software comprising instructions which, when the software is executed by a computer, causes the computer to carry out the method of claim 13.

15. A non-transitory machine-readable storage medium which stores computer software according to claim 14.
